# EUROPEAN PATENT SPECIFICATION

(11) **EP 3 195 520 B1**
(45) Date of publication and mention of the grant of the patent: **28.04.2021**
(21) Application number: 15777616.2
(22) Date of filing: 15.09.2015
(51) Int. Cl.: H04L 9/08, H04L 9/32, H04L 29/06, G06Q 20/08

(54) **AUTHENTICATION OF COMMUNICATIONS**
AUTHENTIFIZIERUNG VON KOMMUNIKATIONEN
AUTHENTIFICATION DE COMMUNICATIONS

(30) Priority: 15.09.2014 GB 201416282
(43) Date of publication of application: 26.07.2017
(73) Proprietor: Mastercard International, Inc., Purchase, NY 10577 (US); Mastercard Ireland Limited, Dublin 18 (IE)
(72) Inventor: ROBERTS, Dave, Appleton Warrington Cheshire WA4 5RD (GB); SMETS, Patrik, B-2560 Nijlen (BE); MESTRE, Patrick, B-5330 Sart-Bernard (BE); GARRETT, Duncan, London N1 2EJ (GB)
(74) Representative: Richardson, Mark Jonathan
(86) International application number: PCT/EP2015/071039
(87) International publication number: WO 2016/041931

(56) References cited:
- US-A1- 2008 089 517
- SAAR DRIMER AND STEVEN J MURDOCH COMPUTER LABORATORY ET AL: "Keep Your Enemies Close: Distance Bounding Against Smartcard Relay Attacks", USENIX,, 8 August 2007 (2007-08-08), pages 1-16, XP061011081, [retrieved on 2007-08-08]
- "EMV - Integrated Circuit Card Specifications for Payment Systems. Book 2: Security and Key Management", INTERNET CITATION, 1 June 2008 (2008-06-01), page 176pp, XP007913922, Retrieved from the Internet: URL:http://www.iro.umontreal.ca/~salvail/s ecurite/notes2010/EMVv4.2Book2.pdf [retrieved on 2010-07-14]
- Timo Olkkonen: "Generic Authentication Architecture", , 11 December 2006 (2006-12-11), XP055519153, Retrieved from the Internet: URL:https://pdfs.semanticscholar.org/7325/ 61fa7c0d24459a4b61e8fdb0bb3a29deb4fb.pdf [retrieved on 2018-10-25]

## Description

### Field of the Invention

The present invention relates to authentication of communications, more particularly but not exclusively to authentication of communications in a transaction between an issuer and a Point of Interaction, and between a transaction device and a Point of Interaction in a payment transaction.

### Background

In a typical payment transaction between a transaction device (e.g. a contact or contactless integrated circuit chip card) and a Point of Interaction (POI, e.g. a card payment terminal, an automated teller machine or an online payment terminal), transaction data is sent by the POI to an issuer for approval and verification. The response of the issuer to the POI, for example, to approve or decline the payment transaction, is sent back to the POI which can then take action accordingly.

However, if the communications between the issuer and the POI were intercepted by a fraudulent user, then the response from the issuer could be modified. For example, a response to decline a payment transaction could be changed to an approval. The POI would then approve the transaction as it is unable to verify that the response from the issuer is authentic. Generally, the fraud would be noticed when the payment transaction undergoes clearing, but this may be too late to prevent the fraudulent user from obtaining any goods or services paid for by the fraudulent payment transaction.

A typical payment transaction may also involve a user of the transaction device verifying their identity by entering a Personal Identification Number (PIN) or by undergoing biometric authentication (e.g. fingerprint or finger vein recognition, iris scanning etc.) at the POI. The POI then sends the information identifying the user to the transaction device for verification. The transaction device can then respond to the POI as to whether the verification was successful or failed.

However, if the communications between the transaction device and the POI were intercepted by a fraudulent user, then the response from the transaction device could be modified. For example, the result of a PIN verification could be changed from failed to successful. Generally, the fraud would be noticed when the payment transaction undergoes clearing, but this may be too late to prevent the fraudulent user from obtaining any goods or services paid for by the fraudulent payment transaction.

An article entitled "Keep Your Enemies Close: Distance Bounding Against Smartcard Relay Attacks", by Saar Drimer and Steven J Murdoch Computer Laboratory et al. (8 August 2007) describes a distance bounding protocol with the aim of preventing relay attacks.

The present invention has been devised to mitigate or overcome at least some of the above-mentioned problems.

### Summary of the Invention

According to an aspect of the present invention, there is provided a method of authenticating a communication network comprising a transaction device, an issuer entity and a point of interaction device, wherein there is a first path between the transaction device and the point of interaction device and a second path between the issuer entity and the point of interaction device, the method being executed at the point of interaction device and comprising: receiving, from the transaction device, a first session key, the first session key being generated by the transaction device using a function, wherein an input to the function comprises an incremented variable; receiving, from the transaction device, a first device response and a first device cryptogram; forwarding the first device response and the first device cryptogram to the issuer entity for validation; receiving, from the issuer entity, a second device response regarding allowability of a transaction following processing of the first device response and the first device cryptogram by the issuer entity, and a second device cryptogram that is signed with a second session key, the second session key being generated by the issuer entity using the function; verifying the second device cryptogram by determining that the first session key matches the second session key; and defining the communication network as authentic in the event that the second device cryptogram is verified.

Accordingly, in order to defraud the transaction, an attacker would have to tamper with both the session key received from the transaction device as well as the session key from the issuer entity.

The step of determining may comprise directly comparing the first session key and the second session key.

Preferably, the incremented variable is a count of the number of transactions carried out by the transaction device. Alternatively, the incremented variable is a time.

Preferably, the first session key is received with data associated with a transaction. Optionally, the second session key is received with data associated with a transaction.

Preferably, the transaction device is arranged to carry out transactions with the point of interaction device.

Preferably, the issuer entity is arranged to validate transactions between the transaction device and the point of interaction device.

A non-transitory computer-readable storage medium storing executable computer program instructions may be configured to implement the above method.

According to an aspect of the present invention, there is provided a point of interaction device suitable for authenticating a communication network, the communication network comprising a transaction device, an issuer entity and a point of interaction device, wherein there is a first path between the transaction device and the point of interaction device and a second path between the issuer entity and the point of interaction device, the point of interaction device comprising: a first input, arranged to receive: a first session key from the transaction device, the first session key being generated by the transaction device using a function, wherein an input to the function comprises an incremented variable; a first device response from the transaction device; and a first device cryptogram from the transaction device; an output, arranged to forward the first device response and the first device cryptogram to the issuer entity for validation; a second input, arranged to receive a second device response regarding allowability of a transaction following processing of the first device response and the first device cryptogram by the issuer entity, and a second device cryptogram that is signed with a second session key from the issuer entity, the second session key being generated by the issuer entity using the function; a processor arranged to verify the second device cryptogram by determining that the first session key matches the second session key, and define that the communication network is authentic in the event that the second device cryptogram is verified.

The processor may be arranged to determine that the first session key and the second session key are the same by directly comparing the first session key and the second session key.

Preferably, the first input and the second input are the same.

Additionally, the point of interaction device may comprise an output arranged to output a verification message to the transaction device or the issuer entity device, wherein the verification message comprises whether the communication was successfully authenticated by the point of interaction device.

Optionally, the point of interaction device may comprise a display and an output arranged to output a transaction outcome to the display.

### Brief Description of the Drawings

In order that the invention may be more readily understood, embodiments of the invention will now be described in more detail, by way of example only, and with reference to the following figures in which:
Figure 1 is a schematic block diagram of an environment in which an embodiment of the present invention is carried out;
Figure 2 is a schematic block diagram of a Point of Interaction according to an embodiment of the present invention;
Figure 3 is a schematic block diagram of a transaction device according to an embodiment of the present invention;
Figure 4 is a schematic block diagram of an issuer according to an embodiment of the present invention;
Figures 5, 6 and 8 are example dataflows; and
Figure 7 is a dataflow according to an embodiment of the invention.

### Detailed Description of the Preferred Embodiments

The present invention provides a system and method for authenticating responses in data communications between a first party and a second party via an intermediary by signing the responses with a session key independently generated by each party and sent to the intermediary for validation. In the embodiments described below, the intermediary is a POI, the first party is a transaction device and the second party is an issuer. Accordingly, in order to defraud the transaction, an attacker would have to tamper with both the communication channel between the transaction device and the POI as well as the communication channel between the POI and the issuer.

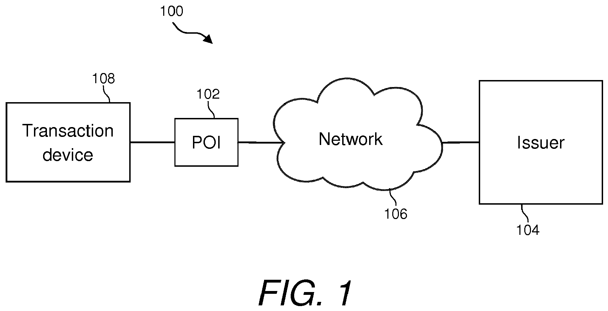

Figure 1 shows an example environment 100 in which a transaction can occur. The environment comprises a Point of Interaction (POI) 102 and an issuer 104 each with separate data connections to a network 106. The network 106 allows two way data transfer between any of the entities connected to it. For example, the network 106 may be a local area network, wide area network or the Internet.

The POI 102 is arranged to form temporary communication channels with a transaction device 108 to carry out transactions. The POI 102 may be a card payment terminal, an automated teller machine or an online payment terminal, and the transaction device 108 may be a contact or contactless integrated circuit chip card. During a transaction, the POI 102 sends and receives transaction data to and from the issuer 104 via the network 106.

The issuer 104 is arranged to process the transaction data and determine whether the transaction should be allowed to complete or be rejected. For example, if there are insufficient funds to complete the transaction or the transaction device has expired etc. The issuer 104 sends a response communication to the POI 102 comprising its determination of whether the transaction should be approved or declined.

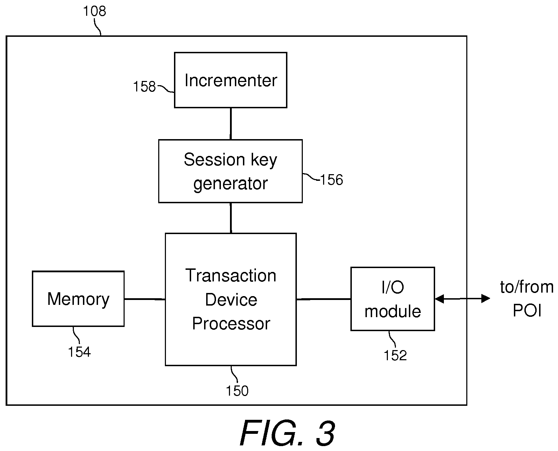

The transaction device 108 is associated with a user. Accordingly, the transaction device is arranged to only allow the user to carry out transactions (see also the description relating to Figure 3 below).

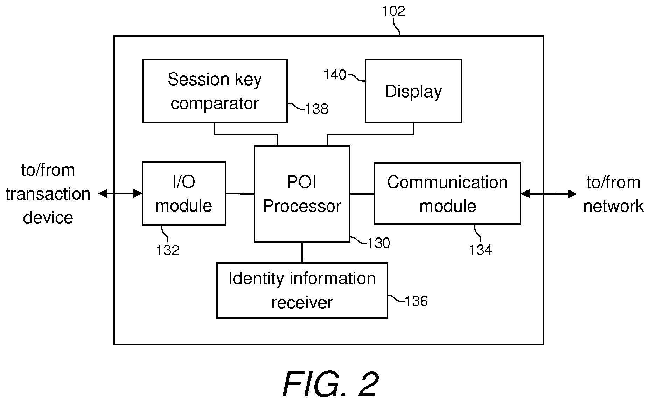

Figure 2 shows the POI 102 in greater detail. The POI 102 comprises a POI processor 130 for controlling the POI 102. The POI 102 further comprises an input/output (I/O) module 132 for communicating with the transaction device 108, a communication module 134 for communicating with the network 106, an identity information receiver 136 for verifying the identity of a user of the transaction device 108, a session key comparator 138 for validating received session keys and a display 140 for providing visual feedback to users. The I/O module 132, the communication module 134, the identity information receiver 136, the session key comparator 138 and the display 140 are each connected to the POI processor 130.

The identity information receiver 136 is arranged to obtain verifiable information associated with the user. For example, the identity information receiver 136 may comprise a PIN-entry pad, a keyboard suitable for password input, a fingerprint scanner, a finger vein scanner or an iris scanner.

Figure 3 shows the transaction device 108 in greater detail. The transaction device 108 comprises a transaction device processor 150 for controlling the transaction device 108. The transaction device 108 further comprises an I/O module 152 for communicating with the POI 102, a memory 154 for securely storing data, a session key generator 156 and an incrementer 158. The I/O module 152, the memory 154 and the session key generator 156 are each connected to the transaction device processor 150. The incrementer 158 is connected to the session key generator 156 which uses the incrementer 158 to generate a session key for a transaction.

The memory 154 stores information associated with the user, for example a PIN or biometric data. During transactions, the POI 102 obtains information associated with the user and sends the information to the transaction device 108 for verification with the data stored in the memory 154. The transaction device processor 150 is arranged to determine whether the received information corresponds to an authorised user of the transaction device 108.

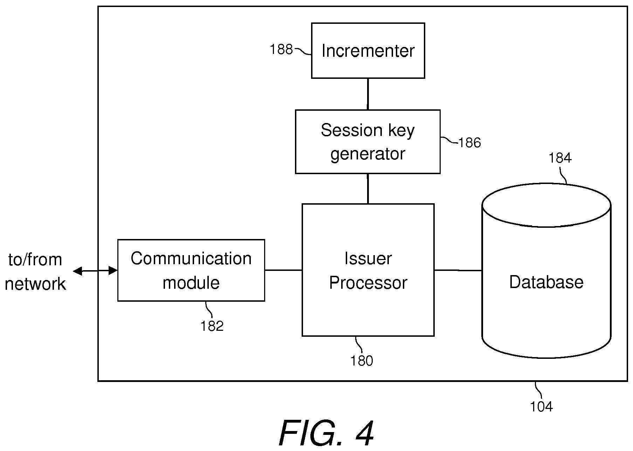

Figure 4 shows the issuer 104 in greater detail. The issuer 104 comprises an issuer processor 180 for controlling the issuer 104. The issuer 104 further comprises a communication module 182 for communicating with the network 106, a database 184, a session key generator 186 and an incrementer 188. The communication module 182, the database 184 and the session key generator 186 are each connected to the issuer processor 180. The incrementer 188 is connected to the session key generator 186 which uses the incrementer 188 to generate a session key for a transaction.

The database 184 comprises information associated with the transaction device 108 such as a transaction device number, a security code (e.g. a card security code, card verification data, a card verification number, a card verification value, a card verification value code, a card verification code a or signature panel code), a name of an authorised user, an address of an authorised user, time validity and an available balance of credit of the user.

The session key generator 156 of the transaction device 108 and the session key generator 186 of the issuer 104 are arranged in substantially the same way to perform a function to generate a session key that is different for each transaction. The input to the function is obtained from the incremeters 158 and 188 of the transaction device 108 and the issuer 104 respectively. The incrementers 158 and 188 independently count the total number of transactions carried out using the transaction device 108. The incrementer 158 of the transaction device 108 counts the number of transactions by counting the number of times it carries out (successful or unsuccessful) transactions with POIs. The incrementer 188 of the issuer 104 counts the number of transaction by counting the number of times it is requested to approve or deny a transaction. Accordingly, the independent counts maintained by the incrementers 158 and 188 remain synchronised.

The incrementers 158 and 188 may both be configured to ascend the same predetermined number sequence using the transaction number to determine the position in the number sequence. In other embodiments, the incrementers 158 and 188 may be clocks that are synchronised at an initial time.

In the examples below, the communications between the transaction device 108 and the POI 102, and between the issuer 104 and the POI 102, are referred to as 'responses'. Further, the examples below do not illustrate all communications that occur during a transaction for clarity.

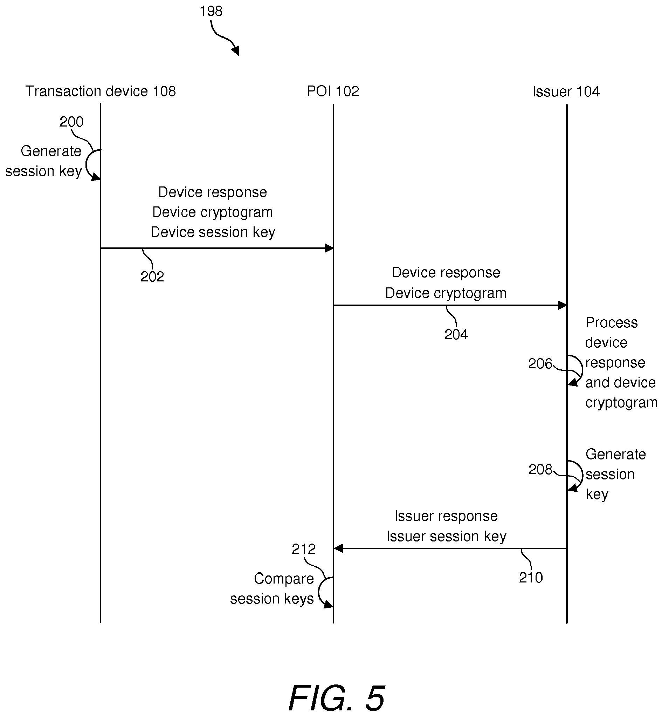

Figures 5 to 8 below show example dataflows between the transaction device 108, POI 102 and issuer 104 and the generation of session keys by the issuer 104 and the transaction device 108. It is noted that the session keys can be generated by the issuer 104 and the transaction device 108 respectively at any time prior to them being sent to the POI 102, and not necessarily in the sequence shown in dataflows 198 and 250.

Figure 5 shows an example dataflow 198 between the transaction device 108, the POI 102 and the issuer 104 in which the communications from the issuer 104 are authenticated. Once the transaction device 108 and the POI 102 form a temporary connection between the I/O module 132 of the POI and the I/O module 152 of the transaction device for carrying out a payment transaction, the session key generator 156 of the transaction device 108 generates at Step 200 a session key for the transaction. Then the transaction device 108 sends at Step 202 a device response, a device cryptogram and a session key to the POI 102. The POI 102 forwards at Step 204 the device response and the device cryptogram to the issuer 104 via the network 106.

Following this, the issuer 104 processes at Step 206 the device response and the device cryptogram to check if the transaction is valid. The issuer 104 uses the information associated with the transaction device in the database 184 to determine whether the transaction should be approved or denied based on the transaction data comprising the device response and the device cryptogram.

The session key generator 186 of the issuer 104 generates at Step 208 a session key for the transaction. The response of the issuer regarding the allowability of the transaction and the session key are then sent at Step 210 back to the POI. The POI 102 then compares at Step 212 the session key from the transaction device 108 and the session key from the issuer 104 to determine whether they match. If they match, then the POI 102 can trust that the issuer response is valid. Accordingly, the response received by the POI 102 regarding whether the transaction should be approved or denied is a genuine response.

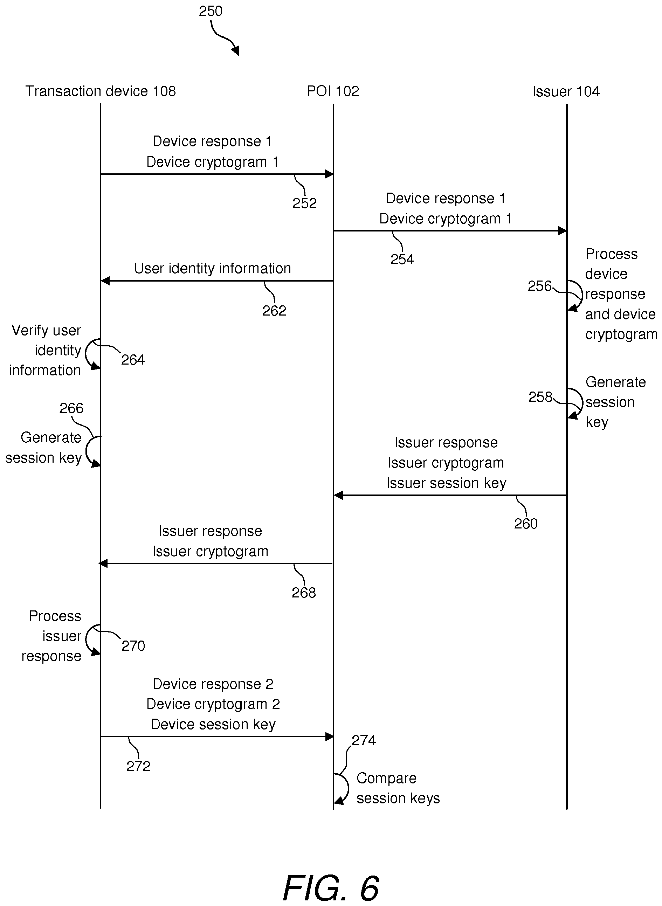

Figure 6 shows an example dataflow 250 between the transaction device 108, the POI 102 and the issuer 104 in which the communications from the transaction device 108 are authenticated. Once the transaction device 108 and the POI 102 form a temporary connection between the I/O module 132 of the POI and the I/O module 152 of the transaction device for carrying out a payment transaction, the transaction device 108 sends at Step 252 transaction data comprising a first device response and a first device cryptogram to the POI 102. The POI 102 then forwards at Step 254 the transaction data to the issuer 104.

Following this, the issuer 104 processes at Step 256 the first device response and the first device cryptogram to check if the transaction is valid. The issuer 104 uses the information associated with the transaction device in the database 184 to determine whether the transaction should be approved or denied based on the transaction data in the first device response and the first device cryptogram. The issuer 104 determines the allowability of the transaction that is conditional on successful identity verification of the user of the transaction device. In other examples, the issuer response is not conditional on identity verification of the user.

The session key generator 186 of the issuer 104 generates at Step 258 a session key for the transaction. The response of the issuer regarding the allowability of the transaction and the session key are then sent at Step 260 back to the POI 102.

After the transaction device 108 sends in Step 252 the first device response and the first device cryptogram to the POI 102, the display 140 indicates to the user to provide information associated with them that can be used to verify their identity (e.g. the user's PIN). The POI 102 sends at Step 262 the information associated with the user to the transaction device 108.

Upon receiving the information associated with the user, the transaction device processor 150 verifies at Step 264 that the user is authorised to use the transaction device. This verification is done by comparing the received information associated with the user with the information associated with the user stored in the memory 154.

Then the session key generator 156 of the transaction device 108 generates at Step 266 a session key for the transaction.

The response of the issuer sent at Step 260 is forwarded at Step 268 to the transaction device 108. The transaction device 108 processes at Step 270 the response of the issuer. Then the transaction device 108 sends at Step 272 a second device response along with a second device cryptogram and the session key generated at Step 266. The second device response comprises information including whether the identity of the user was successfully verified.

The POI 102 then compares at Step 274 the session key from the transaction device 108 and the session key from the issuer 104 to determine whether they match. If they match, then the POI 102 can trust that the second device response is valid. Accordingly, the response received by the POI 102 regarding whether the user is authorised to use the transaction device 108 is a genuine response.

Steps 262, 264 and 266 may be carried out substantially at the same time as Steps 254, 256, 258, 260 and 268. Carrying out these steps in parallel reduces the overall time required to carry out the transaction.

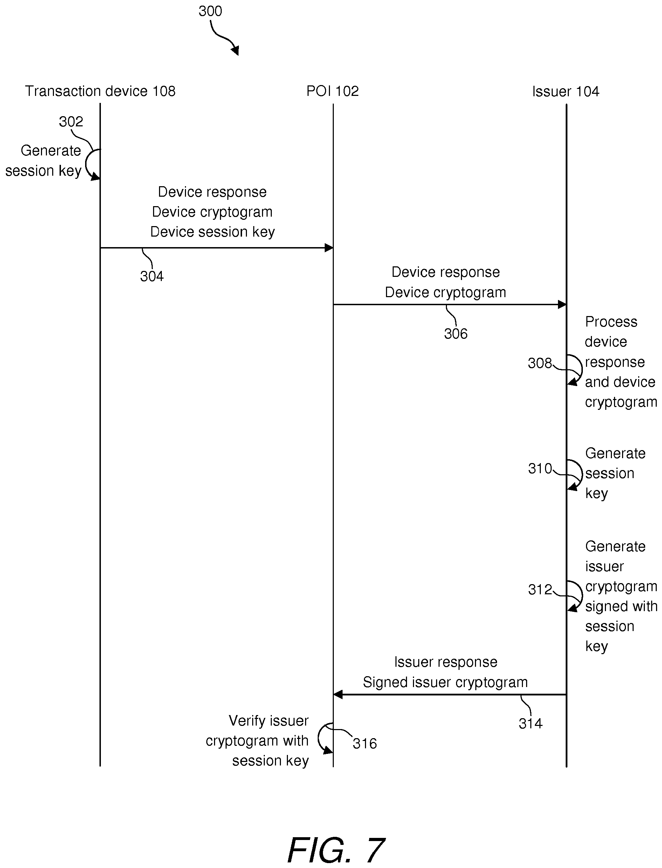

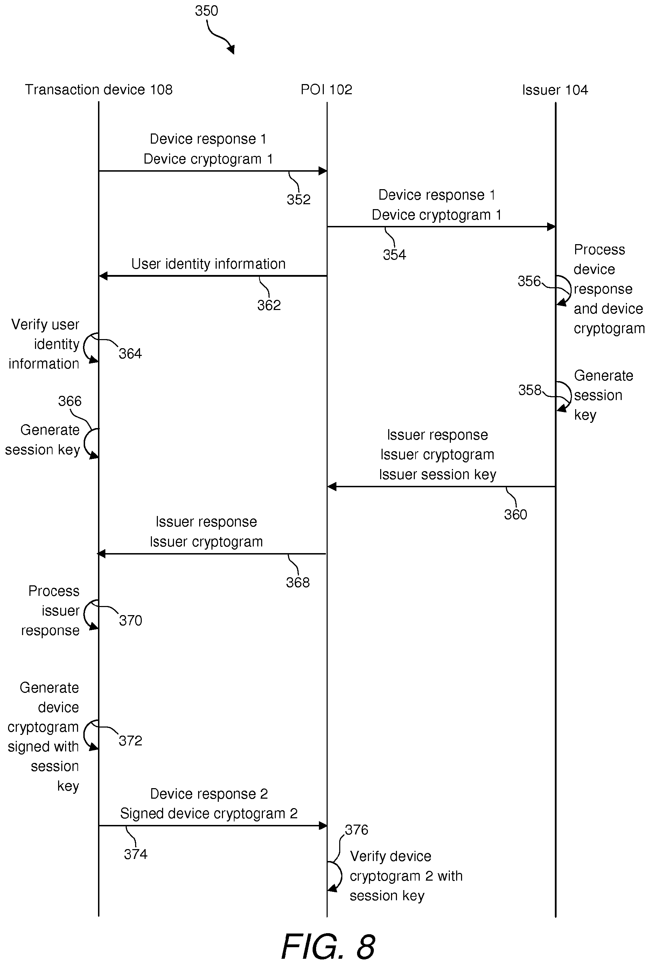

The dataflows of Figures 7 and 8 are substantially similar to the dataflows of Figures 5 and 6 respectively. However, in the embodiments described with reference to Figure 7 and in the example described with reference to Figure 8, the transaction device 108 and the issuer 104 do not both send the session key to the POI 102. Instead, one device sends the session key and the other devices sends data associated with the session key, for example, a response or cryptogram signed with the session key. The POI 102 then verifies the signed cryptogram or response using the received session key. This is discussed in more detail below.

Figure 7 shows an example dataflow 300 between the transaction device 108, the POI 102 and the issuer 104 in which the communications from the issuer 104 are authenticated. Once the transaction device 108 and the POI 102 form a temporary connection between the I/O module 132 of the POI and the I/O module 152 of the transaction device for carrying out a payment transaction, the session key generator 156 of the transaction device 108 generates at Step 302 a session key for the transaction. Then the transaction device 108 sends at Step 304 a device response, a device cryptogram and a session key to the POI 102. The POI 102 forwards at Step 306 the device response and the device cryptogram to the issuer 104 via the network 106.

Following this, the issuer 104 processes at Step 308 the device response and the device cryptogram to check if the transaction is valid. The issuer 104 uses the information associated with the transaction device in the database 184 to determine whether the transaction should be approved or denied based on the transaction data comprising the device response and the device cryptogram.

The session key generator 186 of the issuer 104 generates at Step 310 a session key for the transaction. The issuer 104 then generates at Step 312 a cryptogram that is signed with the session key.

The response of the issuer regarding the allowability of the transaction and the signed issuer cryptogram are then sent at Step 314 back to the POI. The POI 102 then verifies at Step 316 the signed issuer cryptogram using an authentication algorithm and the session key from the transaction device 108 to infer the session key generated by the issuer 104. If the issuer cryptogram is successfully verified, then the POI 102 can trust that the issuer response is valid. Accordingly, the response received by the POI 102 regarding whether the transaction should be approved or denied is a genuine response.

Figure 8 shows an example dataflow 350 between the transaction device 108, the POI 102 and the issuer 104 in which the communications from the transaction device 108 are authenticated. Once the transaction device 108 and the POI 102 form a temporary connection between the I/O module 132 of the POI and the I/O module 152 of the transaction device for carrying out a payment transaction, the transaction device 108 sends at Step 352 transaction data comprising a first device response and a first device cryptogram to the POI 102. The POI 102 then forwards at Step 354 the transaction data to the issuer 104.

Following this, the issuer 104 processes at Step 356 the first device response and the first device cryptogram to check if the transaction is valid. The issuer 104 uses the information associated with the transaction device in the database 184 to determine whether the transaction should be approved or denied based on the transaction data in the first device response and the first device cryptogram. The issuer 104 determines the allowability of the transaction that is conditional on successful identity verification of the user of the transaction device. In other embodiments, the issuer response is not conditional on identity verification of the user.

The session key generator 186 of the issuer 104 generates at Step 358 a session key for the transaction. The response of the issuer regarding the allowability of the transaction and the session key are then sent at Step 360 back to the POI 102.

After the transaction device 108 sends in Step 352 the first device response and the first device cryptogram to the POI 102, the display 140 indicates to the user to provide information associated with them that can be used to verify their identity (e.g. the user's PIN). The POI 102 sends at Step 362 the information associated with the user to the transaction device 108.

Upon receiving the information associated with the user, the transaction device processor 150 verifies at Step 364 that the user is authorised to use the transaction device. This verification is done by comparing the received information associated with the user with the information associated with the user stored in the memory 154.

Then the session key generator 156 of the transaction device 108 generates at Step 366 a session key for the transaction.

The response of the issuer sent at Step 360 is forwarded at Step 368 to the transaction device 108. The transaction device 108 processes at Step 370 the response of the issuer. Then the transaction device 108 generates at Step 372 a cryptogram that is signed with the session key.

Then the transaction device 108 sends at Step 374 a second device response along with the signed second device cryptogram. The second device response comprises information including whether the identity of the user was successfully verified.

The POI 102 then verifies at Step 376 the signed transaction device cryptogram using an authentication algorithm and the session key from the issuer 104 to infer the session key generated by the transaction device 108. If the transaction device cryptogram is successfully verified, then the POI 102 can trust that the transaction device response is valid. Accordingly, the response received by the POI 102 regarding whether the user is authorised to use the transaction device 108 is a genuine response.

Steps 362, 364 and 366 may be carried out substantially at the same time as Steps 354, 356, 358, 360 and 368. Carrying out these steps in parallel reduces the overall time required to carry out the transaction.

Many modifications may be made to the above examples without departing from the scope of the present invention as defined in the accompanying claims.

For example, the transaction device may comprise an identity information receiver instead of the POI. In this case a user may provide information to verify their identity before the transaction device performs any communication with a POI.

A further example is where the issuer 104 does not comprise an incrementer. Instead, an output value of the incrementer 158 of the transaction device 108 is sent to the issuer 104 with the first transaction device response (i.e. in Step 202, 252, 304 or 352). The output value is signed by the transaction device 108 so that the issuer can trust the output value. Freshness of the session key (e.g. to prevent a replay attack, where the same input variables are provided) is ensured by a random value generated by the POI 102 and sent to the transaction device 108 and also signed by the transaction device 108 along with the output value of the incrementer 158. The POI 102 sends the random value to the issuer 104. The issuer 104 can then verify that the transaction device 108 has signed the random value so that this signature cannot be pre-computed and cannot be replayed as the random value is unpredictable and changes for every transaction. The issuer 104 receives the output value of the incrementer 158 and checks that it is fresh (i.e. has not been used before) and genuine by verifying the signature. The issuer 104 then uses the output value of the incrementer 158 of the transaction device 108 to compute the session key.

## Claims

1. A method of authenticating a communication network comprising a transaction device (108), an issuer entity (104) and a point of interaction device (102), wherein there is a first path between the transaction device (108) and the point of interaction device (102) and a second path between the issuer entity (104) and the point of interaction device (102), the method being executed at the point of interaction device (102) and comprising:
receiving, from the transaction device (108), a first session key, the first session key being generated (304) by the transaction device (108) using a function, wherein an input to the function comprises an incremented variable;
receiving, from the transaction device (108), a first device response and a first device cryptogram;
forwarding (306) the first device response and the first device cryptogram to the issuer entity (104) for validation;
receiving, from the issuer entity (104), a second device response regarding allowability of a transaction following processing of the first device response and the first device cryptogram by the issuer entity (104), and a second device cryptogram that is signed with a second session key, the second session key being generated (310) by the issuer entity (104) using the function;
verifying (316) the second device cryptogram by determining that the first session key matches the second session key; and
defining the communication network as authentic in the event that the second device cryptogram is verified.

2. The method of authenticating a communication network of Claim 1, wherein the step of determining comprises directly comparing the first session key and the second session key.

3. The method of authenticating a communication network of Claim 1 or Claim 2, wherein the incremented variable is a count of the number of transactions carried out by the transaction device (108), or the incremented variable is a time.

4. The method of authenticating a communication network of any preceding claim, wherein the first session key is received with data associated with a transaction and/or the second session key is received with data associated with a transaction.

5. The method of authenticating a communication network of any preceding claim, wherein the transaction device (108) is arranged to carry out transactions with the point of interaction device (102), and the issuer entity (104) is arranged to validate transactions between the transaction device (108) and the point of interaction device (102).

6. A non-transitory computer-readable storage medium storing executable computer program instructions for implementing on a point of interaction device the method of any preceding claim.

7. A point of interaction device suitable for authenticating a communication network, the communication network comprising a transaction device (108), an issuer entity (104) and a point of interaction device (102), wherein there is a first path between the transaction device (108) and the point of interaction device (102) and a second path between the issuer entity (104) and the point of interaction device (102), the point of interaction device (102) comprising:
a first input, arranged to receive:
a first session key from the transaction device (108), the first session key being generated by the transaction device (108) using a function, wherein an input to the function comprises an incremented variable;
a first device response from the transaction device (108); and
a first device cryptogram from the transaction device (108);
an output, arranged to forward the first device response and the first device cryptogram to the issuer entity (104) for validation;
a second input, arranged to receive a second device response regarding allowability of a transaction following processing of the first device response and the first device cryptogram by the issuer entity (104), and a second device cryptogram that is signed with a second session key from the issuer entity (104), the second session key being generated by the issuer entity (104) using the function;
a processor arranged to verify the second device cryptogram by determining that the first session key matches the second session key, and define that the communication network is authentic in the event that the second device cryptogram is verified.

8. The point of interaction device of Claim 7, wherein the first input and the second input are the same.

9. The point of interaction device of Claim 7 or Claim 8, comprising an output arranged to output a verification message to the transaction device (108) or the issuer entity (104), wherein the verification message comprises whether the communication was successfully authenticated by the point of interaction device (102).

10. The point of interaction device of any of Claims 7 to 9, comprising a display and an output arranged to output a transaction outcome to the display.

## Patentansprüche

1. Verfahren zum Authentifizieren eines Kommunikationsnetzes, das eine Transaktionsvorrichtung (108), eine Ausgeberinstanz (104) und eine Interaktionspunktvorrichtung (102) umfasst, wobei es einen ersten Pfad zwischen der Transaktionsvorrichtung (108) und der Interaktionspunktvorrichtung (102) und einen zweiten Pfad zwischen der Ausgeberinstanz (104) und der Interaktionspunktvorrichtung (102) gibt, wobei das Verfahren an der Interaktionspunktvorrichtung (102) ausgeführt wird und Folgendes umfasst:
Empfangen, von der Transaktionsvorrichtung (108), eines ersten Sitzungsschlüssels, wobei der erste Sitzungsschlüssel durch die Transaktionsvorrichtung (108) unter Verwendung einer Funktion erzeugt (304) wird, wobei eine Eingabe in die Funktion eine inkrementierte Variable umfasst;
Empfangen, von der Transaktionsvorrichtung (108), einer ersten Vorrichtungsantwort und eines ersten Vorrichtungskryptogramms;
Weiterleiten (306) der ersten Vorrichtungsantwort und des ersten Vorrichtungskryptogramms an die Ausgeberinstanz (104) für eine Validierung;
Empfangen, von der Ausgeberinstanz (104), einer zweiten Vorrichtungsantwort bezüglich einer Zulässigkeit einer Transaktion nach Verarbeiten der ersten Vorrichtungsantwort und des ersten Vorrichtungskryptogramms durch die Ausgeberinstanz (104), und eines zweiten Vorrichtungskryptogramms, das mit einem zweiten Sitzungsschlüssel signiert ist, wobei der zweite Sitzungsschlüssel durch die Ausgeberinstanz (104) unter Verwendung der Funktion erzeugt (310) wird;
Verifizieren (316) des zweiten Vorrichtungskryptogramms durch Bestimmen, dass der erste Sitzungsschlüssel mit dem zweiten Sitzungsschlüssel übereinstimmt; und
Definieren des Kommunikationsnetzes als authentisch im Falle, dass das zweite Vorrichtungskryptogramm verifiziert ist.

2. Verfahren zum Authentifizieren eines Kommunikationsnetzes nach Anspruch 1, wobei der Schritt des Bestimmens ein direktes Vergleichen des ersten Sitzungsschlüssels und des zweiten Sitzungsschlüssels umfasst.

3. Verfahren zum Authentifizieren eines Kommunikationsnetzes nach Anspruch 1 oder 2, wobei die inkrementierte Variable eine Zählung der Anzahl der Transaktionen ist, die durch die Transaktionsvorrichtung (108) durchgeführt werden, oder die inkrementierte Variable eine Zeit ist.

4. Verfahren zum Authentifizieren eines Kommunikationsnetzes nach einem der vorhergehenden Ansprüche, wobei der erste Sitzungsschlüssel mit Daten empfangen wird, die mit einer Transaktion verknüpft sind, und/oder der zweite Sitzungsschlüssel mit Daten empfangen wird, die mit einer Transaktion verknüpft sind.

5. Verfahren zum Authentifizieren eines Kommunikationsnetzes nach einem der vorhergehenden Ansprüche, wobei die Transaktionsvorrichtung (108) angeordnet ist, um Transaktionen mit der Interaktionspunktvorrichtung (102) umzusetzen, und die Ausgeberinstanz (104) angeordnet ist, um Transaktionen zwischen der Transaktionsvorrichtung (108) und der Interaktionspunktvorrichtung (102) zu validieren.

6. Nicht flüchtiges, computerlesbares Speichermedium, das ausführbare Computerprogrammanweisungen zum Implementieren, auf einer Interaktionspunktvorrichtung, des Verfahrens nach einem der vorhergehenden Ansprüche speichert.

7. Interaktionspunktvorrichtung, die zum Authentifizieren eines Kommunikationsnetzes geeignet ist, wobei das Kommunikationsnetz eine Transaktionsvorrichtung (108), eine Ausgeberinstanz (104) und eine Interaktionspunktvorrichtung (102) umfasst, wobei es einen ersten Pfad zwischen der Transaktionsvorrichtung (108) und der Interaktionspunktvorrichtung (102) und einen zweiten Pfad zwischen der Ausgeberinstanz (104) und der Interaktionspunktvorrichtung (102) gibt, wobei die Interaktionspunktvorrichtung (102) Folgendes umfasst:
eine erste Eingabe, die angeordnet ist, um Folgendes zu empfangen:
einen ersten Sitzungsschlüssel von der Transaktionsvorrichtung (108), wobei der erste Sitzungsschlüssel durch die Transaktionsvorrichtung (108) unter Verwendung einer Funktion erzeugt wird, wobei eine Eingabe in die Funktion eine inkrementierte Variable umfasst;
eine erste Vorrichtungsantwort von der Transaktionsvorrichtung (108); und
ein erstes Vorrichtungskryptogramm von der Transaktionsvorrichtung (108);
eine Ausgabe, die angeordnet ist, um die erste Vorrichtungsantwort und das erste Vorrichtungskryptogramm an die Ausgeberinstanz (104) für die Validierung weiterzuleiten;
eine zweite Eingabe, die angeordnet ist, um eine zweite Vorrichtungsantwort bezüglich der Zulässigkeit einer Transaktion nach Verarbeiten der ersten Vorrichtungsantwort und des ersten Vorrichtungskryptogramms durch die Ausgeberinstanz (104) zu empfangen, und ein zweites Vorrichtungskryptogramm, das mit einem zweiten Sitzungsschlüssel von der Ausgeberinstanz (104) signiert ist, wobei der zweite Sitzungsschlüssel durch die Ausgeberinstanz (104) unter Verwendung der Funktion erzeugt wird;
einen Prozessor, der angeordnet ist, um das zweite Vorrichtungskryptogramm durch Bestimmen, dass der erste Sitzungsschlüssel mit dem zweiten Sitzungsschlüssel übereinstimmt, zu verifizieren und zu definieren, dass das Kommunikationsnetzwerk authentisch ist, im Falle, dass das zweite Vorrichtungskryptogramm verifiziert ist.

8. Interaktionspunktvorrichtung nach Anspruch 7, wobei die erste Eingabe und die zweite Eingabe die gleiche ist.

9. Interaktionspunktvorrichtung nach Anspruch 7 oder 8, die eine Ausgabe umfasst, die angeordnet ist, um eine Verifizierungsnachricht an die Transaktionsvorrichtung (108) oder die Ausgeberinstanz (104) auszugeben, wobei die Verifizierungsnachricht umfasst, ob die Kommunikation durch die Interaktionspunktvorrichtung (102) erfolgreich authentifiziert wurde.

10. Interaktionspunktvorrichtung nach einem der Ansprüche 7 bis 9, die eine Anzeige und eine Ausgabe umfasst, die angeordnet ist, um ein Transaktionsergebnis an die Anzeige auszugeben.

## Revendications

1. Procédé d'authentification d'un réseau de communication comprenant un dispositif de transaction (108), une entité émettrice (104) et un dispositif de point d'interaction (102), dans lequel il y a un premier trajet entre le dispositif de transaction (108) et le dispositif de point d'interaction (102) et un second trajet entre l'entité émettrice (104) et le dispositif de point d'interaction (102), le procédé étant exécuté au niveau du dispositif de point d'interaction (102) et comprenant :
la réception, depuis le dispositif de transaction (108), d'une première clé de session, la première clé de session étant générée (304) par le dispositif de transaction (108) à l'aide d'une fonction, une entrée de la fonction comprenant une variable incrémentée ;
la réception, depuis le dispositif de transaction (108), d'une première réponse de dispositif et d'un premier cryptogramme de dispositif ;
la transmission (306) de la première réponse de dispositif et du premier cryptogramme de dispositif à l'entité émettrice (104) pour validation ;
la réception, depuis l'entité émettrice (104), d'une seconde réponse de dispositif concernant l'autorisation d'une transaction suite au traitement de la première réponse de dispositif et du premier cryptogramme de dispositif par l'entité émettrice (104), et un second cryptogramme de dispositif qui est signé avec une seconde clé de session, la seconde clé de session étant générée (310) par l'entité émettrice (104) à l'aide de la fonction ;
la vérification (316) du second cryptogramme de dispositif en déterminant que la première clé de session correspond à la seconde clé de session ; et
la définition du réseau de communication comme authentique dans le cas où le cryptogramme du second dispositif est vérifié.

2. Procédé d'authentification d'un réseau de communication selon la revendication 1, dans lequel l'étape de détermination comprend la comparaison directe de la première clé de session et de la seconde clé de session.

3. Procédé d'authentification d'un réseau de communication selon la revendication 1 ou la revendication 2, dans lequel la variable incrémentée est un décompte du nombre de transactions effectuées par le dispositif de transaction (108), ou la variable incrémentée est un temps.

4. Procédé d'authentification d'un réseau de communication selon l'une quelconque des revendications précédentes, dans lequel la première clé de session est reçue avec des données associées à une transaction et/ou la seconde clé de session est reçue avec des données associées à une transaction.

5. Procédé d'authentification d'un réseau de communication selon l'une quelconque des revendications précédentes, dans lequel le dispositif de transaction (108) est agencé pour effectuer des transactions avec le dispositif de point d'interaction (102), et l'entité émettrice (104) est agencée pour valider les transactions entre le dispositif de transaction (108) et le dispositif de point d'interaction (102).

6. Support de stockage non transitoire lisible par ordinateur stockant des instructions de programme informatique exécutables pour mettre en œuvre sur un dispositif de point d'interaction le procédé selon l'une quelconque des revendications précédentes.

7. Dispositif de point d'interaction adapté à l'authentification d'un réseau de communication, le réseau de communication comprenant un dispositif de transaction (108), une entité émettrice (104) et un dispositif de point d'interaction (102), dans lequel il existe un premier trajet entre le dispositif de transaction (108) et le dispositif de point d'interaction (102) et un second trajet entre l'entité émettrice (104) et le dispositif de point d'interaction (102), le dispositif de point d'interaction (102) comprenant :
une première entrée, agencée pour recevoir :
une première clé de session provenant du dispositif de transaction (108), la première clé de session étant générée par le dispositif de transaction (108) à l'aide d'une fonction, une entrée de la fonction comprenant une variable incrémentée ;
une première réponse de dispositif provenant du dispositif de transaction (108) ; et
un premier cryptogramme de dispositif provenant du dispositif de transaction (108) ;
une sortie, agencée pour transmettre la première réponse de dispositif et le premier cryptogramme de dispositif à l'entité émettrice (104) pour validation ;
une seconde entrée, agencée pour recevoir une seconde réponse de dispositif concernant l'autorisation d'une transaction après le traitement de la première réponse de dispositif et du premier cryptogramme de dispositif par l'entité émettrice (104), et un second cryptogramme de dispositif qui est signé avec une seconde clé de session provenant de l'entité émettrice (104), la seconde clé de session étant générée par l'entité émettrice (104) à l'aide de la fonction ;
un processeur agencé pour vérifier le second cryptogramme de dispositif en déterminant que la première clé de session correspond à la seconde clé de session, et pour définir que le réseau de communication est authentique dans le cas où le second cryptogramme de dispositif est vérifié.

8. Dispositif de point d'interaction selon la revendication 7, dans lequel la première entrée et la seconde entrée sont les mêmes.

9. Dispositif de point d'interaction selon la revendication 7 ou la revendication 8, comprenant une sortie agencée pour délivrer un message de vérification au dispositif de transaction (108) ou à l'entité émettrice (104), le message de vérification comprenant le fait de savoir si la communication a été authentifiée avec succès par le dispositif de point d'interaction (102).

10. Dispositif de point d'interaction selon l'une quelconque des revendications 7 à 9, comprenant un affichage et une sortie agencés pour délivrer un résultat de transaction à l'affichage.
